**Europäisches Patentamt**

**European Patent Office**

**Office européen des brevets**

(19)

(11) Publication number : **0 607 065 A1**

## (12) EUROPEAN PATENT APPLICATION

(21) Application number : **94400027.2**

(22) Date of filing : **05.01.94**

(51) Int. Cl.⁵ : **F25D 17/04, A23L 3/26**

(30) Priority : **09.01.93 KR 93228**
**11.01.93 KR 93264**
**16.02.93 KR 932062 U**
**13.03.93 KR 933818**
**05.07.93 KR 9312247 U**

(43) Date of publication of application :
**20.07.94 Bulletin 94/29**

(84) Designated Contracting States :
**DE FR GB**

(71) Applicant : **GOLDSTAR CO. LTD.**
**20, Yoido-Dong**
**Yongdungpo-Ku**
**Seoul (KR)**

(72) Inventor : **Lee, Jong Uk**
**116-14, Banji-dong, Changwon-si**
**Kyungsangnam-do (KR)**
Inventor : **Shim, Jin Hak**
**31/4, 141-24, Munhyun 3-dong, Nam-ku**
**Busan-si (KR)**
Inventor : **Hwang, Gui Nan**
**83, Buwon-dong,**
**Kimhe-shi**
**Kyungsangnam-do (KR)**

(74) Representative : **Chameroy, Claude et al**
**c/o Cabinet Malemont**
**42, avenue du Président Wilson**
**F-75116 Paris (FR)**

(54) **Device for crystallizing ion structure of food or drinking water in refrigerator by utilizing magnetic energy.**

(57) The device includes a magnetic energy generator (4) disposed at a region adjacent to a food or a drinking water stored in a refrigerator (1) or interposed between an outer box (7) and an inner box (8) of the refrigerator. The magnetic energy generator (4) includes a permanent magnet or an electromagnet. A paramagnetic member (9) is disposed over the magnetic energy generator to diffuse a magnetic field. The permanent magnet is provided with a coil (10) wound around the permanent magnet and connected to an electric power source (11) so as to enable a generation of higher magnetic energy. The device further includes a storage container (13) installed in the refrigerator and molded to include a powder magnet (14) or constructed to include a permanent magnet (4) so as to generate magnetic energy. Where the magnetic energy generator (4) is disposed beneath the storage container (13), the device also includes a drive unit (16,23) adapted to move the magnetic energy generator.

FIG.4

## BACKGROUND OF THE INVENTION

The present invention relates to a device for crystallizing the ion structure of a food or a drinking water in a refrigerator by utilizing magnetic energy, and more particularly to a device for crystallizing the ion structure of a food or a drinking water stored in a refrigerator by applying magnetic energy to the food or the drinking water, thereby capable of keeping the freshness of the food or the drinking water for a long time and providing the food or the drinking water as a health food.

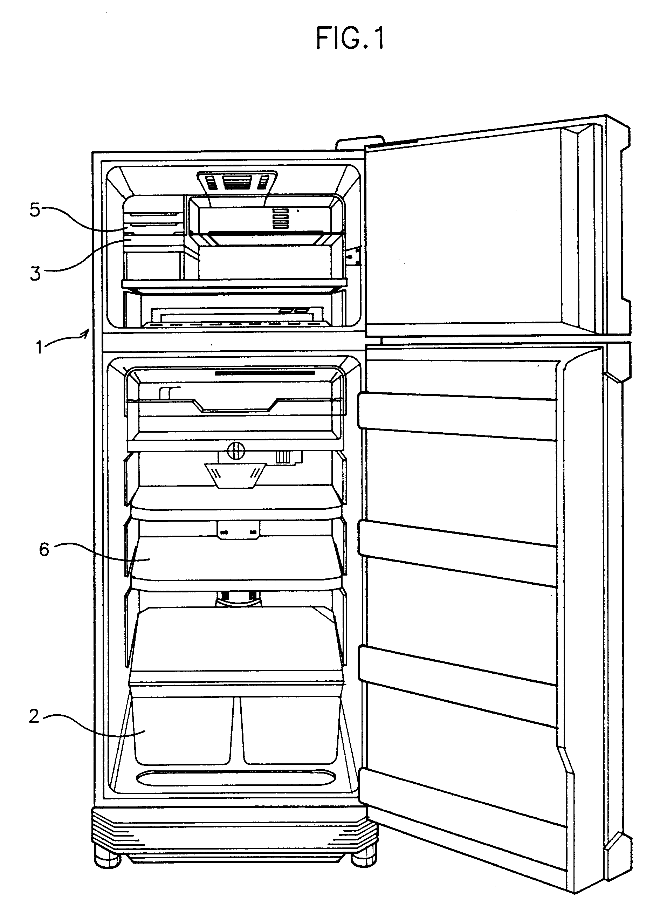

Generally, a refrigerator has a construction shown in FIG. 1 and includes a refrigerator body 1 equipped with storage containers, such as a vegetable box, ice containers and shelves, made of a plastic material and adapted to store a variety of foods. For instance, a vegetable box 2 is slidably disposed at the lower portion of the refrigerator body 1. Alternatively, the vegetable box 2 is hingably mounted to the lower portion of the refrigerator body 1.

However, this conventional vegetable box 2 is adapted to simply contain foods to be stored. As a result, when various foods such as vegetables and fruits are stored in the vegetable box 2 for a long time, the moisture contained the foods are evaporated and vent through a cold air passage of the refrigerator body 1, thereby causing the freshness of the foods to be deteriorated. In severe cases, the stored foods may be decomposed.

## SUMMARY OF THE INVENTION

An object of the invention is to provide a device for crystallizing the ion structure of a food or a drinking water stored in a refrigerator from the pentagonal ring structure to the hexagonal ring structure exhibiting a high surface tension of a water molecule by transmitting lines of magnetic force through the food or the drinking water, thereby capable of keeping the freshness of the food or the drinking water for a long time and providing the food or the drinking water as a health food.

In accordance with one aspect, the present invention provides a device for crystallizing the ion structure of a food or a drinking water in a refrigerator, comprising: magnetic energy generation means disposed at a region adjacent to a food or a drinking water stored in the refrigerator or interposed between an outer box and an inner box of the refrigerator.

In accordance with another aspect, the present invention provides a device for crystallizing the ion structure of a food or a drinking water in a refrigerator, comprising: a storage container installed in the refrigerator, said storage container being molded to include a powder magnet or constructed to include a permanent magnet so that lines of magnetic force generated from said powder magnet can exert on the interior of the storage container.

In accordance with another aspect, the present invention provides a device for crystallizing the ion structure of a food or a drinking water in a refrigerator, comprising: magnetic energy generation means disposed beneath a storage container installed in the refrigerator and adapted to generate a magnetic energy to be transmitted to the interior of said storage container; and drive means adapted to move said magnetic energy generation means.

## BRIEF DESCRIPTION OF THE DRAWINGS

Other objects and aspects of the invention will become apparent from the following description of embodiments with reference to the accompanying drawings in which:

FIG. 1 is a perspective view of a refrigerator, showing its inner construction;

FIG. 2 is a partially-broken perspective view of an ice box provided at its lower portion with a permanent magnet in accordance with the present invention;

FIG. 3a is a partially-broken perspective view of an outer case in which a permanent magnet is molded in accordance with the present invention;

FIG. 3b is a perspective view of the permanent magnet shown in FIG. 3a;

FIG. 4 is a sectional view of a refrigerator equipped with a crystallizing device in accordance with a first embodiment of the present invention;

FIG. 5 is a schematic view illustrating magnetic energy generation means constituting a part of the crystallizing device of FIG. 4;

FIG. 6 is a schematic view illustrating operation of the magnetic energy generation means shown in FIG. 5;

FIG. 7 is a sectional view of a storage container in accordance with a second embodiment of the present invention;

FIGS. 8a to 8c are sectional views respectively illustrating storage containers in accordance with a third embodiment of the present invention;

FIGS. 9a and 9b are sectional views respectively illustrating crystallizing devices in accordance with a fourth embodiment of the present invention, wherein FIG. 9a includes a plan view illustrating a paramagnetic member;

FIG. 10 is an exploded perspective view of a crystallizing device modified from the fourth embodiment of the present invention;

FIG. 11 is a schematic view illustrating lines of magnetic force generated by the crystallizing device of FIG. 10;

FIG. 12 is an assembled sectional view of the crystallizing device of FIG. 10;

FIGS. 13a to 13c are sectional views respectively illustrating storage containers applicable to the fourth embodiment of the present invention; and FIG. 14 is a graph depicting the results of a storage container in accordance with the present invention and a conventional storage container with respect to food drying.

## DETAILED DESCRIPTION OF THE PREFERRED EMBODIMENTS

In accordance with the present invention, magnetic energy generating means for applying lines of magnetic force to a food or a drinking water stored in a refrigerator is equipped in the refrigerator. The magnetic energy generating means installed in the refrigerator has no limitation on its position, in so far as it can apply lines of magnetic force to the interior of the refrigerator.

As the magnetic energy generating means, a permanent magnet and an electromagnet can be selectively used. Alternatively, a combination of the permanent magnet and the electromagnet can be used as the magnetic energy generating means.

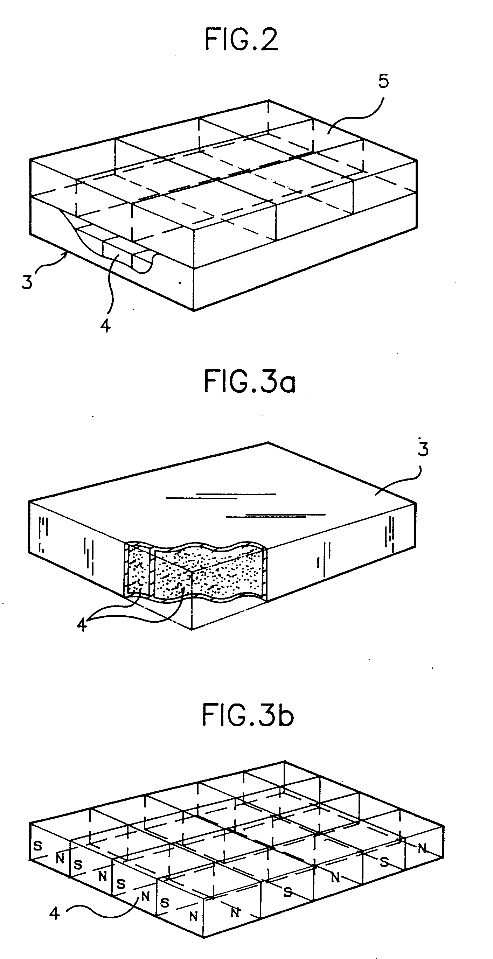

Where the permanent magnet is used as the magnetic energy generating means, a plurality of permanent magnet pieces 4 are molded in an outer case 3, as shown in FIGS. 2 and 3a. The reason why the permanent magnet pieces 4 are molded in the outer case 3 is to prevent an early oxidation of the permanent magnet pieces have a high oxidation force.

In molding, the permanent magnet pieces 4 are arranged such that their polarities exert alternatingly in both the transverse direction and the longitudinal direction, as shown in FIG. 3b. When the permanent magnet is disposed beneath ice containers 5, as shown in FIGS. 1 and 2, such a polarity arrangement maximizes the generation efficiency of a water having the hexagonal ring structure exhibiting a high surface tension of a water molecule (hereinafter, referred to as a hexagonal water). Where the permanent magnet is disposed around foods stored, lines of magnetic force therefrom exert on the stored foods, thereby inhibiting an evaporation of moisture contained in the foods.

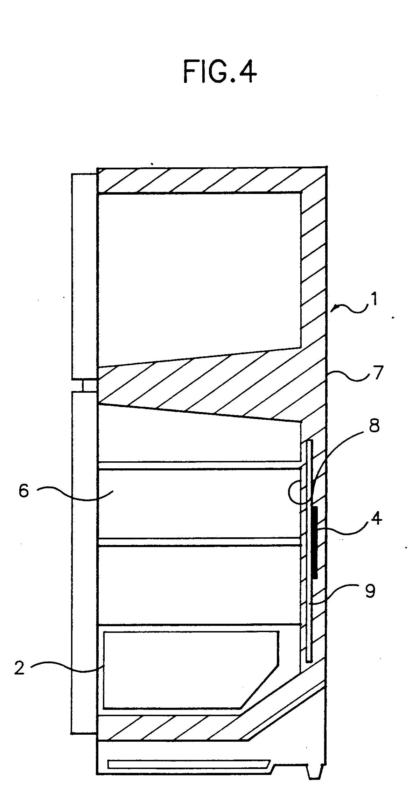

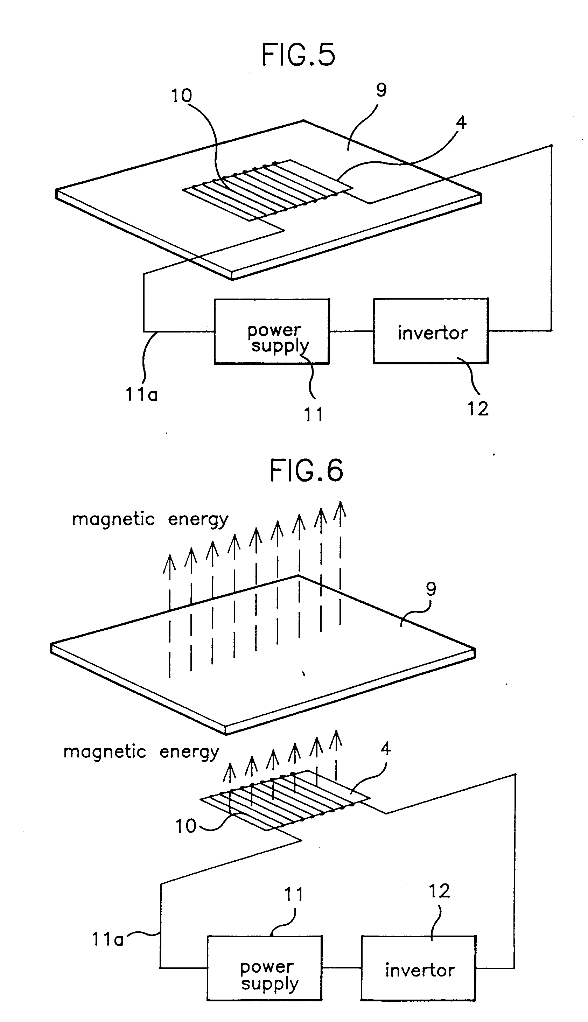

Referring to FIGS. 4 to 6, there is illustrated a crystallizing device in accordance with a first embodiment of the present invention. In this case shown in FIG. 4, the device of the first embodiment is installed to transmit lines of magnetic force in the interior of a refrigerating chamber 6. That is, the device of the first embodiment includes magnetic energy generating means interposed between an outer box 7 and an inner box 8 of the refrigerator so as to transmit lines of magnetic force to the interior of the refrigerator.

The crystallizing device comprises a permanent magnet 4 and a paramagnetic member 9 adapted to be in close contact with the permanent magnet 4 and diffuse a magnetic field by cooperating with the permanent magnet 4.

As the paramagnetic member 9 is disposed adjacent to the permanent magnet 4, magnetic energy generated from the permanent magnet 4 is diffused while passing through the paramagnetic member 9, thereby enabling the efficiency of the magnetic energy to be maximized.

In order to obtain a stronger magnetic field, a coil 10 is wound around the permanent magnet 4 in this embodiment. The coil 10 receives electric power from a power source 11 via a power line 11a. An inverter 12 which is a frequency converter is connected to the power line 11a so as to adjust the intensity of the magnetic field depending on the amount of foods to be stored.

The principle of adjusting the intensity of magnetic energy by connecting the inverter 12 to the power line 11a utilizes the Faraday's law that as the number of magnetic flux links in a closed circuit varies, an electromotive force proportional to the variation by the lapse of time is induced in the circuit.

This principle can be expressed by the following equation:

$$V = L(di/dt).$$

This equation can be further expressed by the following equation:

$$i(t) = 1/L \int V dt.$$

In an inductor only having the inductance L, current induced can be expressed by the following equation:

$$i = \sqrt{2} I \sin \omega t, \text{ (where, } \omega = 2\pi f L).$$

In other words, the present invention utilizes the principle that the magnetic energy is varied depending on a variation in frequency because the current is varied depending on the frequency f and the variation in current results in a variation in the inductance L.

In accordance with the present invention, proper lines of magnetic force obtained by varying the intensity of magnetic energy are transmitted through the moisture contained foods.

Accordingly, the ion structure of water molecule is changed from the pentagonal ring structure to the hexagonal ring structure, so that the surface tension of water molecule is increased, thereby preventing an evaporation of the moisture contained in foods.

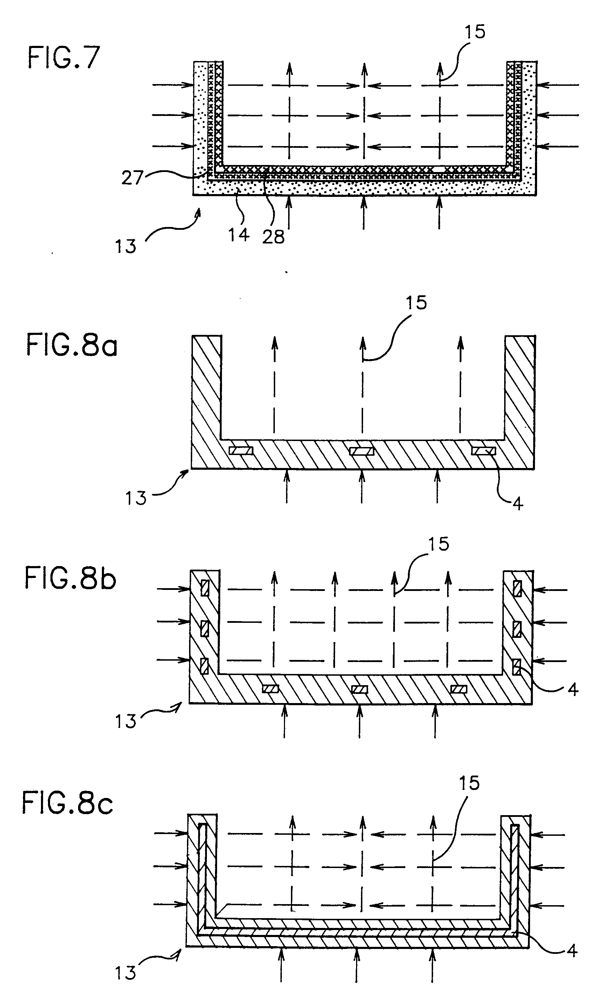

FIG. 7 is a sectional view of a storage container in accordance with a second embodiment of the present invention. In accordance with this embodiment, when a storage container 13 to be used as an ice container, a vegetable box or a shelf installed in a refrigerator is molded, a powder magnet 14 is integrally molded with the storage container 13 by putting the powder magnet together with the material of the storage container 13 and heating them to be molten. By this construction, lines of magnetic force 9 can exert on the interior of the storage container 7.

FIGS. 8a to 8c are sectional views respectively illustrating storage containers in accordance with a third embodiment of the present invention. In accordance with this embodiment, permanent magnet pieces 4 are inserted in the bottom portion of the storage container 13 and then molded in a case of FIG. 8a. In a case of FIG. 8b, permanent magnet pieces 4 are inserted in the bottom portion and the side wall of the storage container 13 and then molded. By the construction in either case, lines of magnetic force 9 can exert on the interior of the storage container 7.

Alternatively, grooves may be formed in the storage container so as to receive the permanent magnet pieces 4.

Where the permanent magnet pieces 4 are arranged such that their polarities exert alternatingly in both the transverse direction and the longitudinal direction when they are inserted or received in the storage container 13, the magnetic field generation efficiency can be more enhanced.

As shown in FIG. 8c, a permanent magnet 4 having the same shape as the storage container 13 may be inserted and then molded. In this case, more lines of magnetic force can be transmitted through the storage container.

Where the permanent magnet 4 inserted in the storage container 13 in either case mentioned above has protrusions at its upper surface, the magnetic field generation efficiency can be maximized because lines of magnetic force are concentrated on the protrusions.

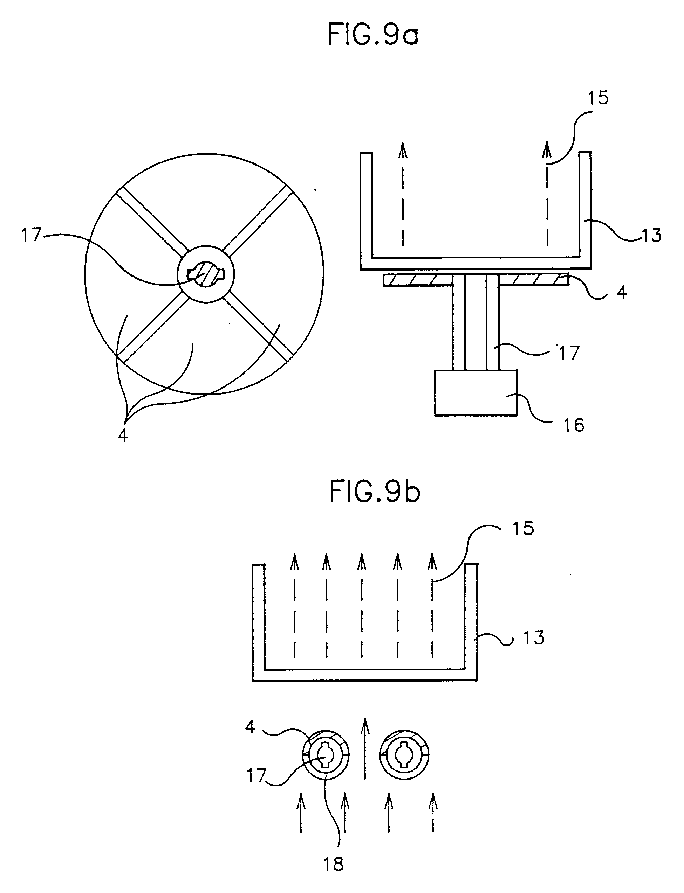

FIGS. 9a and 9b illustrate storage containers in accordance with a fourth embodiment of the present invention, respectively. In accordance with this embodiment, a permanent magnet 4 as the magnetic energy generation means is disposed beneath a storage container 13 with a conventional construction to rotate about a shaft 17 by drive means such as a motor 16. As the permanent magnet 4 rotates by the drive force of the motor 16, lines of magnetic force 15 exert repeatedly on the storage container 13.

Where the permanent magnet 4 is constituted by a combination of permanent magnet pieces having different magnetic field intensities, as shown in FIG. 9a, lines of magnetic force 15 with different intensities exert repeatedly on the storage container 13 when the permanent magnet 4 rotates by the drive force of the motor 16.

Where the permanent magnet 4 is divided into two pieces one being substituted by a non-magnetic member, as shown in FIG. 9b, lines of magnetic force 15 exert intermittently on the storage container 13 when the permanent magnet 4 rotates by the rotation of the shaft 17.

In either case, it is also possible to install a plurality of permanent magnets 4 with the above-mentioned construction. In this case, all the permanent magnets 4 can be operatively connected to the motor 16 by means of timing belts.

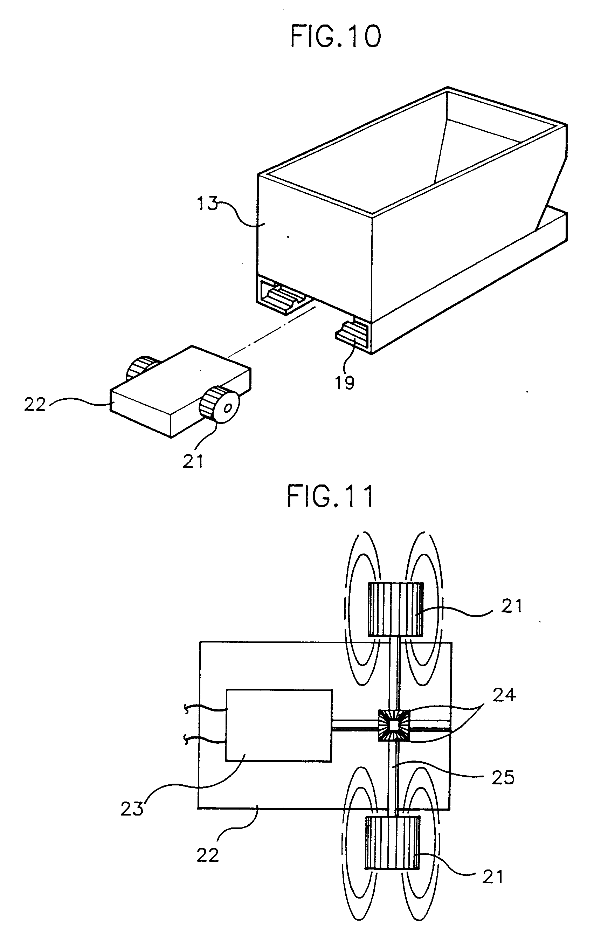

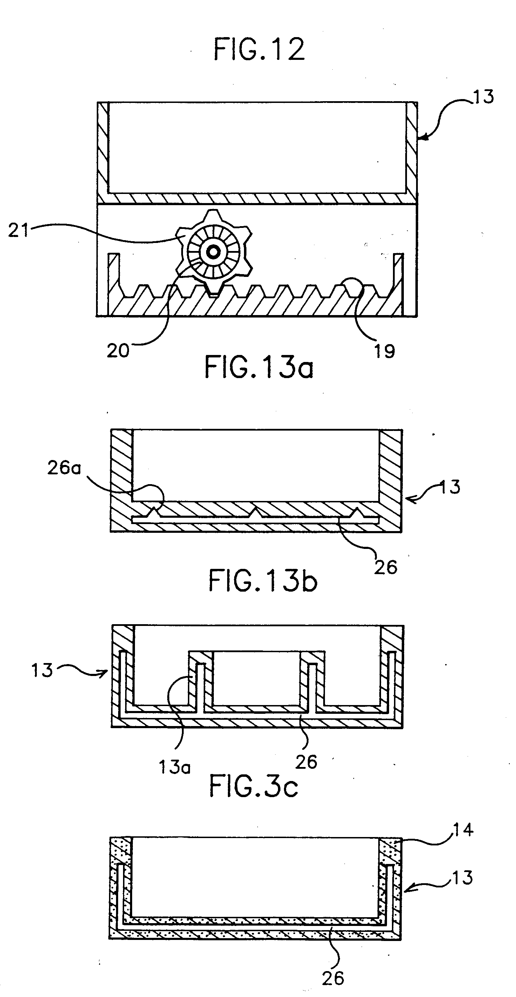

FIG. 10 is a perspective view illustrating a modified construction from the fourth embodiment of the present invention. FIG. 11 is a schematic view illustrating lines of magnetic force generated in the case of FIG. 10.

In this case, a pair of gear rails 19 are provided at the lower portion of a storage container 13 installed in a refrigerator body 1. With the gear rails 19, a pair of gears 21 each containing an electromagnet 20 are respectively engaged to reciprocate along the gear rails 19 by the drive force of drive means.

As shown in FIGS. 11 and 12, the drive means comprises a motor 23 disposed in a casing 22 and adapted to drive the gears 21 and a plurality of bevel gears 24 adapted to transmit the drive force of the motor 23 to the gears! 21. The electromagnet 20 contained in each of the gears 21 is adapted to receive electric power via the core of the shaft 25.

By this construction, when electric power is applied to the motor 23, it is also applied to the electromagnets 20. As a result, lines of magnetic force are formed around the gears 21 respectively containing the electromagnets 20.

As the bevel gears 24 rotate by the drive force of the motor 23 under the above-mentioned condition, the gears 21 reciprocate along the gear rails, respectively, together with the drive means, so that the lines of magnetic force can be repeatedly transmitted through the interior of the storage container 13.

FIGS. 13a to 13c are sectional views respectively illustrating various storage container constructions applicable to the fourth embodiment of the present invention. In all the cases, a paramagnetic member 26 adapted to diffuse magnetic energy is inserted in a storage container 13 in fabrication of the storage container 13. The reason why the paramagnetic member 26 is molded to be contained in the storage container 13 is to distribute lines of magnetic force exerting on the lower portion of the storage container 13 over a large area by the paramagnetic member 26.

The shape of the paramagnetic member 26 inserted in the storage container 13 may be a flat plate shape inserted in the bottom portion of the storage container 13, as shown in FIG. 13a. Otherwise, the storage container 13 has partition walls 13a extending from its bottom portion, as shown in FIG. 13b. In this case, a paramagnetic member 26 having the same shape as the storage container 13 may be molded under a condition that it is inserted in the storage container 13. Where the paramagnetic member 26 having the same shape as the storage container 13 is inserted, as shown in FIG. 13b, a higher magnetic field generation efficiency can be expected because more lines of magnetic force are transmitted to the interior of the storage container 13.

Alternatively, the storage container 13 may be made of antibiotic ceramic and the paramagnetic member 26 may be inserted in the inner wall of the storage container 13. In this case, it is possible to inhibit the propagation of germs to foods being stored to a maximum. As a result, the decomposition of the foods can be prevented.

The storage container 13 may have a groove at its bottom surface or the entire wall so that the paramagnetic member 26 may be received in the groove.

Where a protrusion 26a is provided at the paramagnetic member 26 molded or received in the storage container 13, as shown in FIG. 13a, lines of magnetic force are concentrated on the tip of the protrusion 26a, thereby maximizing the magnetic field efficiency.

Preferably, antibiotic ceramic 27 emitting far infrared rays is coated on the inner surface of each storage container 13 applicable to the present invention. The far infrared rays emitted from the antibiotic ceramic 27 serve to inhibit the propagation of germs to foods being stored.

More preferably, a smell-removing absorbent 28 is coated on the surface of the antibiotic ceramic 27 coated on the inner surface of the storage container 13, as shown in FIG. 7. This absorbent 28 removes a smell generated when goods are stored for a long time.

It is also understood that goods laid on a shelf can keep their freshness for a long time by mixing a powder magnet in a synthetic resin used for preventing an oxidation of the shelf surface which comes into contact with the goods or using a permanent magnet to fabricate frames of the shelf upon molding the synthetic resin into the shelf.

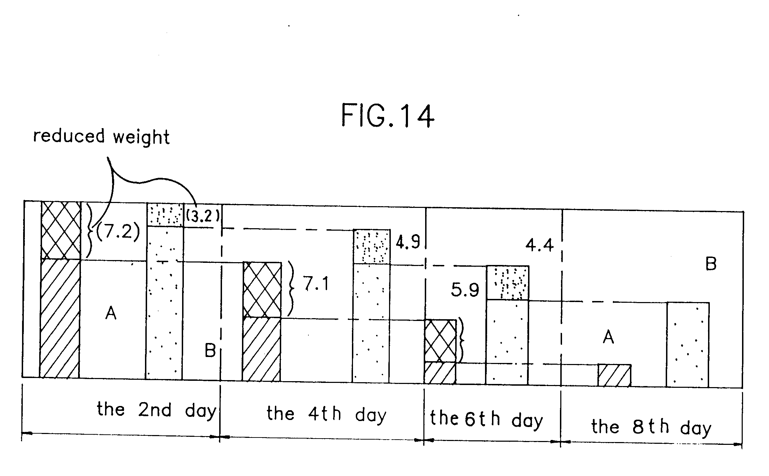

Tests were made in order to evaluate the storage container 13 having the magnetic energy generation means of the present invention and the conventional vegetable box 2 in terms of the effective performance. The results of the tests are depicted in a graph shown in FIG. 14.

As shown in FIG. 14, the moisture of a good A stored in the conventional vegetable box 2 was evaporated by about 7.2% two days after, about 7.1% four days after, and about 5.9% six days after. Eight days after, most of the moisture of the good A was evaporated. On the other hand, the moisture of a good B stored in the storage container 13 having the magnetic energy generation means was evaporated by about 3.2% two days after, about 4.9% four days after, and about 4.4% six days after. Eight days after, the good B still kept the moisture considerably more than that of the good A.

As apparent from the above description, the present invention provides a device for crystallizing the ion structure of a food or a drinking water in a refrigerator by magnetic energy, capable of continuously transmitting constant or variable lines of magnetic force through foods (fruits and vegetables) stored in storage containers such as vegetable boxes, ice containers or shelves.

In the crystallizing device of the present invention, various ions contained in the food or the drinking water move actively by positive and negative polarities accompanying with the lines of magnetic force. As a result, the structure of ions of the food or the drinking water is crystallized from the pentagonal ring structure to the hexagonal ring structure, namely, the structure of hexagonal water, so that it is stabilized.

Since the hexagonal water exhibits a large surface tension, it provides a characteristic of inhibiting the evaporation of moisture. The hexagonal water also provides the food or the drinking water as a health food having an effect of preventing diseases of adult people.

Where the device of the present invention is equipped in a vegetable box of a refrigerator, the evaporation of the moisture of foods contained in the vegetable box can be inhibited by magnetic energy generated from the device. In other word, the present invention breaks the conventional concept of the simple storage by temperature and provides an advantage that the freshness of the foods can be kept for a long time.

Where the device of the present invention is equipped in an ice box of a refrigerator, icing of a water contained in the ice box is achieved after the water is changed into the hexagonal water having the hexagonal ring structure. The hexagonal water ice exhibits an excellent effect of preventing and treating diseases of adult people such as diabetes, constipation, diarrhea, gastroenteritis and etc..

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A device for crystallizing the ion structure of a food or a drinking water in a refrigerator, comprising:

   magnetic energy generation means disposed at a region adjacent to a food or a drinking water stored in the refrigerator.

2. A device in accordance with claim 1, wherein said magnetic energy generation means comprises a permanent magnet.

3. A device in accordance with claim 1, wherein said magnetic energy generation means comprises an electromagnet.

4. A device in accordance with claim 2 or claim 3, wherein said magnetic energy generation means is molded to be disposed in an outer case of the refrigerator.

5. A device in accordance with claim 1, further comprising a paramagnetic member disposed above said magnetic energy generation means and adapted to diffuse a magnetic field.

6. A device in accordance with claim 2, wherein said permanent magnet is provided with a coil wound around the permanent magnet and connected to an electric power source, said coil being adapted to enable a generation of higher magnetic energy upon receiving an electric power.

7. A device in accordance with claim 6, further comprising an inverter connected to one end of said coil and adapted to control the intensity of the magnetic energy.

8. A device for crystallizing the ion structure of a food or a drinking water in a refrigerator, comprising:
   magnetic energy generation means interposed between an outer box and an inner box of the refrigerator.

9. A device in accordance with claim 8, wherein said magnetic energy generation means comprises a permanent magnet.

10. A device in accordance with claim 8, wherein said magnetic energy generation means comprises an electromagnet.

11. A device in accordance with claim 8, wherein said magnetic energy generation means comprises a permanent magnet and an electromagnet.

12. A device in accordance with any one of claims 9 to 11, further comprising a paramagnetic member disposed above said magnetic energy generation means and adapted to diffuse a magnetic field.

13. A device in accordance with claim 11, wherein said permanent magnet is provided with a coil wound around the permanent magnet and connected to an electric power source, said coil being adapted to enable a generation of higher magnetic energy upon receiving an electric power.

14. A device in accordance with claim 13, further comprising an inverter connected to one end of said coil and adapted to control the intensity of the magnetic energy.

15. A device for crystallizing the ion structure of a food or a drinking water in a refrigerator, comprising:

   a storage container installed in the refrigerator, said storage container being molded to include a powder magnet so that lines of magnetic force generated from said powder magnet can exert on the interior of the storage container.

16. A device in accordance with claim 15, further comprising an antibiotic ceramic coated on the inner surface of said storage container.

17. A device in accordance with claim 16, further comprising a smell-removing absorbent coated on the surface of said antibiotic ceramic.

18. A device for crystallizing the ion structure of a food or a drinking water in a refrigerator, comprising:
   a storage container installed in the refrigerator, said storage container having a permanent magnet fixed to the storage container so that lines of magnetic force generated from said powder magnet can exert on the interior of the storage container.

19. A device in accordance with claim 18, wherein said permanent magnet comprises a plurality of permanent magnet pieces inserted in the bottom surface or the entire wall of said storage container.

20. A device in accordance with claim 18, wherein said storage container is provided at its outer surface with a groove for receiving said permanent magnet constituted by a plurality of permanent magnet pieces.

21. A device in accordance with claim 19 or claim 20, wherein said permanent magnet pieces are arranged such that their polarities exert alternatingly in both the transverse direction and the longitudinal direction.

22. A device in accordance with claim 18, wherein said permanent magnet has the same shape as that of said storage container and inserted in the storage container.

23. A device in accordance with any one of claims 19, 20 and 22, wherein said permanent magnet has at least one protrusion adapted to concentrate lines of magnetic force.

24. A device in accordance with claim 18, further comprising an antibiotic ceramic coated on the inner surface of said storage container.

25. A device in accordance with claim 24, further comprising a smell-removing absorbent coated on the surface of said antibiotic ceramic.

26. A device for crystallizing the ion structure of a food or a drinking water in a refrigerator, comprising:

  magnetic energy generation means disposed beneath a storage container installed in the refrigerator and adapted to generate a magnetic energy to be transmitted to the interior of said storage container; and

  drive means adapted to move said magnetic energy generation means.

27. A device in accordance with claim 26, wherein said magnetic energy generation means comprises a plurality of permanent magnets having different magnetic energy intensities and said drive means comprises a motor so that lines of magnetic force with different intensities exert repeatedly on the interior of said storage container when said permanent magnets rotates by a drive force of said motor.

28. A device in accordance with claim 26, wherein said magnetic energy generation means comprises a half permanent magnet and a half non-magnetic member so that lines of magnetic force exert intermittently on the interior of said storage container.

29. A device in accordance with claim 26, further comprising a gear rail provided at a lower portion of said storage container, and a gear adapted to reciprocate along said gear rail by said drive means, said gear containing said magnetic energy generation means.

30. A device in accordance with claim 29, wherein said drive means comprises:

  a motor;

  a plurality of bevel gears having a shaft supporting said gear, said bevel gears being rotated by a drive force of said motor; and

  a casing for housing the motor and the bevel gears, so that the drive force of the motor is transmitted to the gear via the bevel gears and the shaft, thereby causing the drive means to reciprocate along said gear rail, together with said gear.

31. A device in accordance with claim 26, wherein said magnetic energy generation means comprises a permanent magnet.

32. A device in accordance with claim 26, wherein said magnetic energy generation means comprises an electromagnet.

33. A device in accordance with claim 26, further comprising a paramagnetic member inserted in said storage container, said paramagnetic member having the same shape as that of the storage container.

34. A device in accordance with claim 26, further comprising a paramagnetic member inserted in said storage container, said paramagnetic member comprising a plurality of paramagnetic pieces.

35. A device in accordance with claim 34, wherein said paramagnetic member is inserted in the bottom surface of said storage container.

36. A device in accordance with claim 34, wherein said paramagnetic member is inserted in the entire surface of said storage container.

37. A device in accordance with any one of claims 33 to 36, wherein said paramagnetic member has at least one protrusion adapted to concentrate lines of magnetic force.

# FIG.1

## FIG.2

## FIG.3a

## FIG.3b

# FIG.4

# FIG.5

power
supply

invertor

# FIG.6

magnetic energy

magnetic energy

power
supply

invertor

FIG.7

FIG.8a

FIG.8b

FIG.8c

# FIG.9a

15

17

13

4

17

16

4

# FIG.9b

15

13

4

17

18

## FIG.10

## FIG.11

# FIG.12

13

21

20          19

# FIG.13a

26a

13

26

# FIG.13b

13

13a          26

# FIG.3c

14

13

26

FIG.14

reduced weight

(7.2)
(3.2)

A

B

4.9

7.1

4.4

5.9

B

A

the 2nd day | the 4th day | the 6th day | the 8th day

EP 0 607 065 A1

16

European Patent
Office

**EUROPEAN SEARCH REPORT**

Application Number

EP 94 40 0027

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-A-30 35 914 (HASSAN)<br>* the whole document *<br>--- | 1-3 | F25D17/04<br>A23L3/26 |
| X<br>Y<br>A | DE-A-14 67 785 (BAAKE)<br>* the whole document *<br><br><br>--- | 18<br>19,21,22<br>8-10,13,<br>22,24,25 | |
| Y<br>A | FR-A-2 590 165 (BERUS)<br>* the whole document *<br>--- | 19,21<br>18 | |
| Y<br>A | FR-A-2 649 959 (DELBES ET AL)<br>* the whole document *<br>--- | 22<br>18,19 | |
| A | US-A-4 872 401 (LEE)<br>* the whole document *<br>--- | 18,19 | |
| A | FR-A-2 643 551 (BONTEMPS)<br>* the whole document *<br>--- | 18,19 | |
| A | EP-A-0 111 078 (POSE)<br>* the whole document *<br>----- | 26,31,32 | TECHNICAL FIELDS SEARCHED (Int.Cl.5)<br><br>F25D<br>A23L |

The present search report has been drawn up for all claims

| Place of search | Date of completion of the search | Examiner |
|---|---|---|
| THE HAGUE | 12 April 1994 | Silvis, H |